# EUROPEAN PATENT APPLICATION

(11) **EP 4 614 692 A1**
(43) Date of publication of application: **10.09.2025**
(21) Application number: 23907665.6
(22) Date of filing: 18.12.2023
(51) Int. Cl.: H01M 50/198, H01M 50/197, H01M 50/178, B32B 27/08, B32B 27/32, B32B 7/027

(54) **POUCH-TYPE SECONDARY BATTERY**

(30) Priority: 20.12.2022 KR 20220179920; 15.12.2023 KR 20230183756
(71) Applicant: LG Energy Solution, Ltd., Seoul 07335 (KR)
(72) Inventor: KIM, Mi Na, Daejeon 34122 (KR)
(74) Representative: Plasseraud IP
(86) International application number: PCT/KR2023/020914
(87) International publication number: WO 2024/136380

(57) **Abstract**

A pouch-type secondary battery according to the present invention includes an electrode assembly, a pouch-type case including a receiving portion for accommodating the electrode assembly and a sealing portion for sealing the receiving portion, an electrode lead connected to the electrode assembly and protruding to the outside of the pouch-type case via the sealing portion, and a lead film disposed between the electrode lead and the pouch-type case, wherein the lead film includes a first layer disposed on the electrode lead, a second layer disposed on the first layer, and a third layer disposed on the second layer, wherein the difference in elastic modulus between two layers selected from the first layer to the third layer is 20% or less of the greatest value among the elastic modulus of the first layer to the third layer.

## Description

### TECHNICAL FIELD

This application claims the benefit of Korean Patent Application Nos. 10-2022-0179920, filed on December 20, 2022, and 10-2023-0183756, filed on December 15, 2023, in the Korean Intellectual Property Office, the disclosures of which are incorporated herein in their entirety by reference.

The present invention relates to a pouch-type secondary battery, and more particularly, to a pouch-type secondary battery including a lead film.

### BACKGROUND ART

A secondary battery is applied and used in various fields, ranging from small products such as digital cameras, P-DVDs, MP3Ps, mobile phones, PDAs, portable game devices, power tools, and e-bikes, as well as large products that require high power, such as electric vehicles or hybrid vehicles, and power storage devices for storing surplus generated power or renewable energy, and power storage devices for backup power. Types of a secondary battery include a nickel cadmium battery, a nickel hydrogen battery, a lithium ion battery, a lithium ion polymer battery, and the like.

A secondary battery may be manufactured by accommodating an electrode assembly, in which a positive electrode, a negative electrode, and a separator interposed between the positive electrode and the negative electrode are stacked, in a battery case, injecting an electrolyte into the battery case, and then sealing the battery case. A secondary battery is classified into a pouch-type secondary battery and a can-type secondary battery depending on the material of a case which receives an electrode assembly. Among these, a pouch-type battery may be manufactured by forming a cup portion by performing press processing on a flexible pouch film laminate, and then storing an electrode assembly in a receiving space inside the cup portion and sealing a sealing portion.

A pouch-type secondary battery may generate a gas from an inside of a pouch when operated at high temperatures, overcharged, or short-circuited. If the gas pressure inside the pouch increases, there is a problem in that the sealing portion of the pouch may vent and explode or ignite. In the sealing portion, a bonding portion between an electrode lead and a pouch-type film laminate, which are heterogeneous materials, is likely to vent, in order to secure durability of the pouch-type secondary battery, there is a need for the technology that can improve the sealing strength of the corresponding region.

### DISCLOSURE OF THE INVENTION

### TECHNICAL PROBLEM

The present invention is to solve the above-described problem, and provides a pouch-type secondary battery capable of preventing the interface from being peeled off at a bonding portion between an electrode lead and a pouch-type film laminate due to gas generation inside the pouch.

### TECHNICAL SOLUTION

According to an embodiment of the present invention, there is provided a pouch-type secondary battery, which is a pouch-type secondary battery including an electrode assembly, a pouch-type case including a receiving portion for accommodating the electrode assembly and a sealing portion for sealing the receiving portion, an electrode lead connected to the electrode assembly and protruding to the outside of the pouch-type case via the sealing portion, and a lead film disposed between the electrode lead and the pouch-type case, wherein the lead film includes a first layer disposed on the electrode lead, a second layer disposed on the first layer, and a third layer disposed on the second layer, wherein the difference in elastic modulus between two layers selected from the first layer to the third layer is 20% or less of the greatest value among the elastic modulus of the first layer to the third layer, and the sum of the elastic modulus of each of the first layer to the third layer is 2600 MPa or greater, wherein the elastic modulus is an elastic modulus measured at room temperature by using a UTM. Preferably, the difference in elastic modulus between the second layer and the third layer may be 20% or less of the greater value of the elastic modulus of the second layer and third layer. More preferably, the elastic modulus of each of the first layer to the third layer may be the same as each other.

According to the present invention, the difference in elastic modulus between two layers selected from the first layer to the third layer may be 200 MPa or less.

According to the present invention, the sum of the elastic modulus of each of the first layer to the third layer may be 2600 MPa to 3600 MPa, and the sum of the elastic modulus of each of the first layer to the third layer may be 700 MPa to 1200 MPa.

The second layer may have a melting point of 140 °C to 180 °C. The second layer may include polypropylene, wherein the polypropylene may be a homopolymer. The third layer may have a melting point of 130 °C to 150 °C. The third layer may include polypropylene, wherein the polypropylene may be a copolymer. The first layer may include acid-modified polyolefin.

According to the present invention, one surface of the electrode lead in direct contact with the lead film may be coated with one or more selected from the group consisting of at least one inorganic material among chromium (Cr), nickel (Ni), zirconium (Zr), and titanium (Ti), an aluminum oxide film (Al₂O₃), and a polyvinyl alcohol (PVA)-based, acryl-based and/or epoxy-based resin serving as a binder.

The lead film may have a thickness of 150 µm to 250 µm.

### ADVANTAGEOUS EFFECTS

According to the present invention, the difference in elastic modulus among a first layer to a third layer in a lead film disposed on an electrode lead is designed to be 20% or less of the greatest value among the elastic modulus of the first layer to the third layer. If a pouch-type secondary battery is designed as described above, a sealant layer of a pouch-type film laminate and the third layer and the second layer of the lead film are simultaneously deformed during the process of sealing the pouch-type secondary battery, so that stress concentration may be alleviated. Therefore, by preventing the interface from being peeled off at a bonding portion between the electrode lead and the pouch-type film laminate due to gas generation inside the pouch, it is possible to implement high sealing strength, and to improve the safety of the pouch-type secondary battery.

### BRIEF DESCRIPTION OF THE DRAWINGS

The drawings attached herein illustrate preferred embodiments of the present invention by example, and serve to enable technical concepts of the present invention to be further understood together with detailed description of the invention given below, and therefore the present invention should not be interpreted only with matters in such drawing
FIG. 1 is an exploded assembly view of a pouch-type secondary battery according to the present invention.
FIG. 2 is a cross-sectional view of a sealed pouch-type secondary battery.
FIG. 3 is a cross-sectional view of a lead film according to the present invention.
FIG. 4 is a cross-sectional image when a sealing portion in which a lead assembly is disposed is opened in Example 1.
FIG. 5 is a cross-sectional image after a sealing portion in which a lead assembly is disposed is opened in Example 2.

### MDOE FOR CARRYING OUT THE INVENTION

. Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a portion is said to include a certain component, it means that the portion may further include another component rather than excluding another component unless otherwise stated.

In the present specification, the description of "A and/or B" means A, or B, or A and B.

In the present specification, "%" means wt% unless otherwise noted.

In the present specification, the term "elastic modulus" means a Young's modulus of a polymer film in a machine direction (MD) measured at room temperature using a UTM.

A pouch-type secondary battery according to the present invention includes an electrode assembly, a pouch-type case including a receiving portion for accommodating the electrode assembly and a sealing portion for sealing the receiving portion, an electrode lead connected to the electrode assembly and protruding to the outside of the pouch-type case via the sealing portion, and a lead film disposed between the electrode lead and the pouch-type case. In this case, the lead film includes a first layer disposed on the electrode lead, a second layer disposed on the first layer, and a third layer disposed on the second layer, wherein the difference in elastic modulus between two layers selected from the first layer to the third layer is 20% or less of the greatest value among the elastic modulus of the first layer to the third layer, and the sum of the elastic modulus of each of the first layer to the third layer is 2600 MPa or greater. Here, the elastic modulus is an elastic modulus measured at room temperature by using a UTM.

Hereinafter, with reference to the drawings, each component of the pouch-type secondary battery of the present invention will be described in more detail.

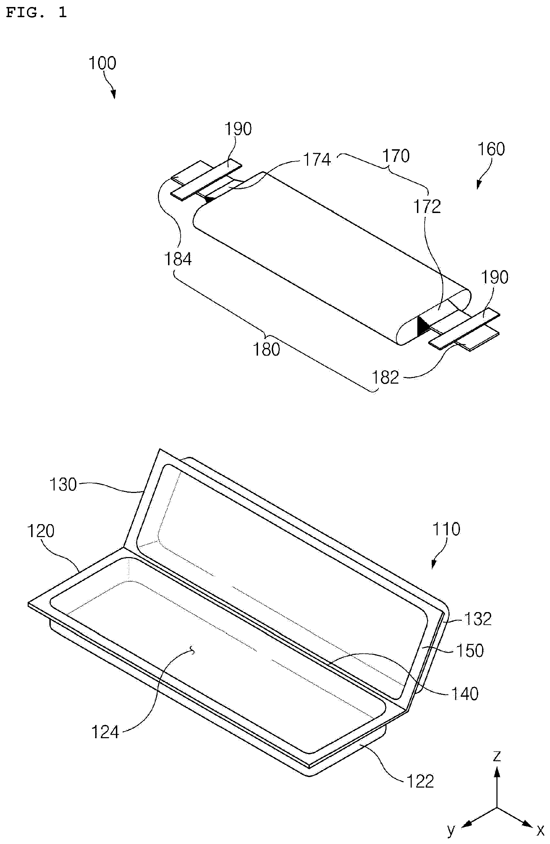

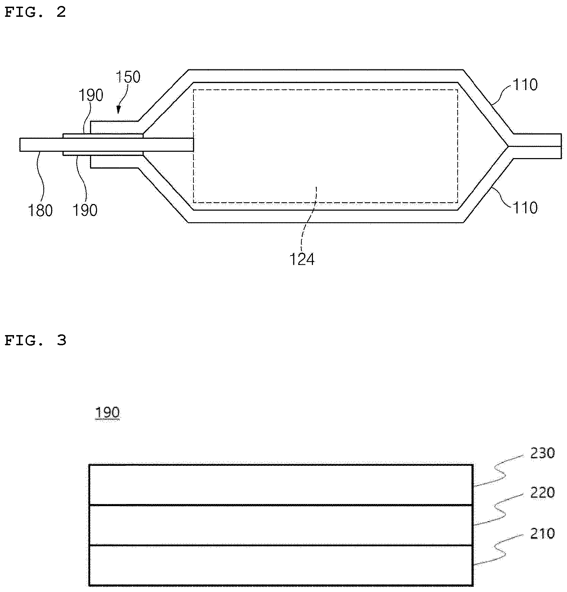

FIG. 1 is an exploded assembly view of a pouch-type secondary battery 100 according to the present invention, and FIG. 2 is a cross-sectional view of the pouch-type secondary battery 100 which is sealed. In FIG. 2, some of the components of the pouch-type secondary battery 100 are omitted for convenience of understanding. As illustrated in FIG. 1 and FIG. 2, the pouch-type secondary battery 100 of the present invention includes a pouch-type case 110, an electrode assembly 160, an electrode lead 180, and a lead film 190.

### (1) Pouch-type case

The pouch-type case 110 is capable of accommodating the electrode assembly 160 thereinside. The pouch-type case 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on the outermost layer of the pouch film laminate to protect the secondary battery from external friction and collision. The base layer is made of a polymer to electrically insulate the electrode assembly from the outside.

The base layer may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fiber. Preferably, the base layer may be made of polyethylene terephthalate (PET), nylon, or a combination thereof, which has wear resistance and heat resistance.

The base layer may have a single-film structure made of any one material. Alternatively, the base layer may have a composite-film structure in which two or more materials respectively form layers.

The thickness of the base layer may be 5 µm to 50 µm, specifically 7 µm to 40 µm, and more specifically 25 µm to 38 µm. If the thickness of the base layer satisfies the above-described ranges, the external insulation is excellent, and the entire pouch is not thick, so that the energy density of the secondary battery with respect to the volume thereof may be excellent.

The gas barrier layer is stacked between the base layer and the sealant layer to secure mechanical strength of the pouch, block the entry of gas, moisture, or the like from the outside of the secondary battery, and prevent leakage of an electrolyte from the inside of the pouch-type case.

The gas barrier layer may be formed of a metal, and specifically, may be formed of an aluminum alloy thin film. If the gas barrier layer is formed by using an aluminum alloy thin film, it is possible to secure mechanical strength of a predetermined level or more, lighten the weight, supplement electrochemical properties by the electrode assembly and the electrolyte, and secure heat dissipation and the like. The aluminum alloy thin film may include one or more selected from the group consisting of metal elements other than aluminum (Al), for example, iron (Fe), copper (Cu), chromium (Cr), manganese (Mn), nickel (Ni), magnesium (Mg), silicon (Si), and zinc (Zn).

The thickness of the gas barrier layer may be 40 µm to 100 µm, specifically 50 µm to 90 µm, and more specifically 55 µm to 85 µm. If the thickness of the gas barrier layer satisfies the above-described ranges, moldability and gas barrier performance are excellent when forming a cup portion.

The sealant layer is to completely seal the inside of the pouch-type case by being thermally bonded to each other at a sealing portion when the pouch-type case accommodating the electrode assembly thereinside is sealed. To this end, the sealant layer may be formed of a material having excellent thermal adhesion strength.

The sealant layer may be formed of a material having insulation properties, corrosion resistance properties, and sealing properties. Specifically, the sealant layer is in direct contact with the electrode assembly and/or the electrolyte inside the pouch-type case, and thus, may be formed of a material having insulation properties and corrosion resistance properties. In addition, the sealant layer has to completely seal the inside of the pouch-type case and block the movement of materials between the inside and the outside, and thus, may be formed of a material having high sealing properties (for example, excellent thermal adhesion strength). In order to secure the insulation properties, corrosion resistance properties, and sealing properties, the sealant layer may be formed of a polymer material. For example, the sealant layer may include polypropylene, but is not limited thereto.

The sealant layer may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fiber, and preferably, the sealant layer may be made of a polyolefin-based resin such as polypropylene (PP) and/or polyethylene (PE). In this case, the polypropylene may be composed of cast polypropylene (CPP), acid-modified polypropylene (PPa), polypropylene-ethylene copolymer, and/or polypropylene-butylene-ethylene ternary copolymer.

The thickness of the sealant layer may be 30 µm to 130 µm, specifically 50 µm to 120 µm, and more specifically 70 µm to 100 µm. If the thickness of the sealant layer satisfies the above-described ranges, there are effects in that the sealing strength of the sealing portion may be secured and the moldability of the pouch film laminate may be secured.

The pouch film laminate may be drawn-molded and stretched by a punch or the like to manufacture the pouch-type case 110. As a result, the pouch-type case 110 may include a cup portion 122 and a receiving portion 124. The receiving portion 124 is a place for accommodating an electrode assembly, and may refer to an accommodation space formed in a pocket form inside the cup portion 122 as the cup portion 122 is formed.

According to an embodiment of the present invention, the pouch-type case 110 may include a first case 120 and a second case 130 as illustrated in FIG. 1. The first case 120 includes the receiving portion 124 capable of accommodating the electrode assembly 160, and the second case 130 may cover the receiving portion 124 from above such that the electrode assembly 160 is not separated out of the battery case 110. The first case 120 and the second case 130 may be manufactured with one side of each thereof connected to each other as illustrated in FIG. 1, but are not limited thereto, and may be manufactured in various ways, such as being separated from each other and manufactured separately.

According to another embodiment of the present invention, when a cup portion is molded on a pouch film laminate, two symmetrical cup portions 122 and 132 may be drawn-molded to be adjacent to each other on one pouch film laminate. In this case, the cup portions 122 and 132 may be formed in each of the first case 120 and the second case 130 as illustrated in FIG. 1. After the electrode assembly 160 is accommodated in the receiving portion 124 provided in the cup portion 122 of the first case 120, the bridge portion 140 formed between the two cup portions 122 and 132 may be folded such that the two cup portions 122 and 132 face each other. In this case, the cup portion 132 of the second case 130 may accommodate the electrode assembly 160 from above. Therefore, since the two cup portions 122 and 132 accommodate one electrode assembly 160, an electrode assembly 160 thicker than when there is one cup portion 122 may be accommodated. In addition, since one edge of the secondary battery 100 is formed by folding the pouch-type case 110, the number of edges to be sealed when a sealing process is performed later may be reduced. Accordingly, the process speed of the pouch-type secondary battery 100 may be improved, and the number of sealing processes may be reduced.

The pouch-type case 110 may be sealed while accommodating the electrode assembly 160 such that a portion of the electrode lead 180 to be described later, that is, a terminal portion, is exposed. Specifically, when the electrode lead 180 is connected to an electrode tab 170 of the electrode assembly 160, and the lead film 190 is formed on a portion of the electrode lead 180, the electrode assembly 160 is accommodated in the receiving portion 124 provided in the cup portion 122 of the first case 120, and the second case 130 may cover the receiving portion 124 from above. Thereafter, an electrolyte may be injected into the receiving portion 124, and a sealing portion 150 formed on the edge of the first case 120 and the second case 130 may be sealed.

The sealing portion 150 may serve to seal the receiving portion 124. Specifically, the sealing portion 150 may seal the receiving portion 124 while being formed along the edge of the receiving portion 124.

The temperature at which the sealing portion 150 is sealed may be 180 °C to 250 °C, specifically 200 °C to 250 °C, and more specifically 210 °C to 240 °C. If the sealing temperature satisfies the above-described numerical ranges, the pouch-type case 110 can secure sufficient sealing strength by thermal bonding.

### (2) Electrode assembly

The electrode assembly 160 may be inserted into the pouch-type case 110, and sealed by the pouch-type case 110 after the injection of the electrolyte.

The electrode assembly 160 may be formed by sequentially stacking a positive electrode, a separator, and a negative electrode. Specifically, the electrode assembly 160 may include two types of electrodes, a positive electrode and a negative electrode, and a separator interposed between the electrodes to insulate the electrodes from each other.

The positive electrode and the negative electrode may each have a structure in which an active material slurry is applied to an electrode current collector in the form of metal foil or metal mesh including aluminum and copper. A slurry may typically be formed by stirring a granular active material, an auxiliary conductor, a binder, a conductive material, and the like in a state in which a solvent is added. The solvent may be removed in a subsequent process.

A slurry in which an electrode active material and a binder and/or a conductive material are mixed is applied to a positive electrode current collector and a negative electrode current collector to manufacture a positive electrode and a negative electrode, and the positive electrode and the negative electrode may be respectively stacked on both sides of a separator to manufacture the electrode assembly 160 in a predetermined shape. Types of the electrode assembly 160 may include a stack type, a jelly-roll type, a stack and fold type, and the like, but are not limited thereto.

The electrode assembly 160 may include the electrode tab 170.

The electrode tabs 170 may be connected to each of the positive electrode and the negative electrode of the electrode assembly 160, and may protrude to the outside from the electrode assembly 160 to serve as a path through which electrons move between the inside and the outside of the electrode assembly 160. An electrode current collector included in the electrode assembly 160 may be composed of a portion to which an electrode active material is applied to and a terminal portion to which the electrode active material is not applied, that is, an uncoated portion. The electrode tab 170 may be formed by cutting the uncoated portion or may be formed by connecting a separate conductive member to the uncoated portion by ultrasonic welding or the like. As illustrated in FIG. 1, the electrode tab 170 may protrude in different directions from the electrode assembly 160, but is not limited thereto, and may protrude in various directions such as protruding side by side in the same direction from one side thereof.

### (3) Electrode lead

The electrode lead 180 may supply electricity to the outside of the secondary battery 100. The electrode lead 180 may be connected to the electrode tab 170 of the electrode assembly 160 by spot welding or the like.

The electrode lead 180 may be connected to the electrode assembly 160 and protrude to the outside of the pouch-type case 110 via the sealing portion 150. Specifically, one end of the electrode lead 180 may be connected to the electrode assembly 160, to the electrode tab 170 in particular, and the other end of the electrode lead 180 may protrude to the outside of the pouch-type case 110.

The electrode lead 180 may include a positive electrode lead 182 having one end connected to a positive electrode tab 172 and extending in a direction in which the positive electrode tab 172 protrudes, and a negative electrode lead 184 having one end connected to a negative electrode tab 174 and extending in a direction in which the negative electrode tab 174 protrudes. Both the positive electrode lead 182 and the negative electrode lead 184 may protrude to the outside of the battery case 110. Therefore, electricity generated inside the electrode assembly 160 may be supplied to the outside. In addition, since the positive electrode tab 172 and the negative electrode tab 174 are each formed to protrude in various directions, the positive electrode lead 182 and the negative electrode lead 184 may also extend in various directions. The positive electrode lead 182 and the negative electrode lead 184 may be made of different materials. That is, the positive electrode lead 182 and the positive electrode current collector may be made of the same material, which is aluminum (Al), and the negative electrode lead 184 and the negative electrode current collector may be made of the same material, which is copper (Cu) or copper coated with nickel (Ni). A portion of the electrode lead 180 protruding to the outside of the battery case 110 may become a terminal portion and be electrically connected to an external terminal.

One surface of the electrode lead 180 in direct contact with the lead film 190 may be coated with one or more selected from the group consisting of at least one inorganic material among chromium (Cr), nickel (Ni), zirconium (Zr), and titanium (Ti), an aluminum oxide film (Al₂O₃), and a polyvinyl alcohol (PVA)-based, acryl-based and/or epoxy-based resin serving as a binder. In this case, corrosion resistance with respect to an electrolyte solution and adhesion to the lead film 190 may be secured.

### (4) Lead film

The lead film 190 is to prevent electricity generated from the electrode assembly 160 from flowing to the battery case 110 via the electrode leads 180.

The lead film 190 may be disposed to surround the outer circumferential surface of the electrode lead 180. Specifically, at least a portion of the electrode lead 180 may be surrounded by the lead film 190. The lead film 190 may be positioned only in the sealing portion 150 in which the first case 120 and the second case 130 of the pouch-type case 110 are thermally fused.

The lead film 190 may be disposed between the electrode lead 180 and the pouch-type case 110. For example, as illustrated in FIG. 2, a lower case 110, the lead film 190, the electrode lead 180, the lead film 190, and an upper case 110 may be sequentially stacked and disposed in a sealing portion 150 region. At this time, the lead film 190 may come in direct contact with the sealant layer of the battery case 110.

In the case of a pouch-type secondary battery to which a typical lead film is applied, the interface between the lead film and the sealant layer of the battery case 110 is opened under high-pressure conditions due to gas generation inside the pouch, so that there is a problem in that durability and safety of the pouch are degraded. In order to solve the above-described problem, the present inventors have repeatedly conducted research, and as a result, have found that when the difference in elastic modulus between each layer included in the lead film 190 is reduced, the interface between the lead film 190 and the sealant layer of the battery case 110 is not peeled off, so that the pouch is not prematurely vent, thereby implementing high sealing strength, and have completed the present invention.

FIG. 3 is a cross-sectional view of the lead film 190 according to the present invention. As illustrated in FIG. 3, the lead film 190 includes a first layer 210, a second layer 220, and a third layer 230 which are sequentially stacked. Specifically, the first layer 210 may be disposed on the electrode lead 180 when the pouch is assembled, the second layer 220 may be disposed on the first layer 210, and the third layer 230 may be disposed on the second layer 220.

According to the present invention, the difference in elastic modulus between two layers selected from the first layer 210, the second layer 220, and the third layer 230 may be 20% or less, specifically 0% to 20%, and more specifically 0% to 10% of the greatest value among the elastic modulus of the first layer 210 to the third layer 230. If the difference in elastic modulus between two layers selected from the first layer 210 to the third layer 230 is greater than 20% of the greatest value among the elastic modulus of the first layer 210 to the third layer 230, there is a problem in that stress is concentrated on an interlayer interface due to a large difference in elastic, which causes interfacial peeling-off. On the other hand, as in the present invention, if the difference in elastic modulus between two layers selected from the first layer 210 to the third layer 230 is 20% or less of the greatest value among the elastic modulus of the first layer 210 to the third layer 230, the sealant layer of the pouch film laminate and the first layer 210 to the third layer 230 of the lead film 190 are simultaneously deformed, thereby reducing stress concentration, so that interfacial peeling-off may not occur.

Preferably, the difference in elastic modulus between the second layer 220 and the third layer 230 may be 20% or less, specifically 0% to 20%, and more specifically 0% to 10%, of the greater value of the elastic modulus of each of the second layer 220 and the third layer 230. If the difference in elastic modulus between the second layer 220 and the third layer 230 is 20% or less of the greater value of the elastic modulus of second layer 220 and the third layer 230, the sealant layer of the pouch film laminate and the second layer 220 and the third layer 230 of the lead film 190 are simultaneously deformed, so that peeling-off may not occur at the interface between the second layer 220 and the third layer 230. As a result, the pouch-type secondary battery may implement high sealing strength without interfacial peeling-off particularly in high-temperature environments.

More preferably, the elastic modulus of each of the first layer 210 to the third layer 230 may be the same as each other in the lead film 190 according to the present invention. If the elastic modulus of each of the first layer 210 to the third layer 230 is the same, deformation concentration in the lead film 190 is reduced, so that only the third layer 230 is not deformed, but the first layer 210 to the third layer 230 are uniformly deformed to prevent interlayer peeling-off, and as a result, high sealing strength of the pouch may be implemented.

In the lead film 190 according to the present invention, the difference in elastic modulus between two layers selected from the first layer 210, the second layer 220, and the third layer 230 may be 200 MPa or less, specifically 0 MPa to 200 MPa, and more specifically 0 MPa to 100 MPa. Preferably, the difference in elastic modulus between the second layer 220 and the third layer 230 may be 200 MPa or less, specifically 0 MPa to 200 MPa, and more specifically 0 MPa to 100 MPa. If the above-described range is satisfied, the sealant layer of the pouch film laminate and each layer of the lead film 190 are simultaneously deformed, thereby reducing stress concentration, so that interfacial peeling-off may not occur.

The sum of the elastic modulus of each of the first layer 210,the second layer 220 and the third layer 230 may be 2600 MPa or greater, specifically 2600 MPa to 3600 MPa, and more specifically 2700 MPa to 3000 MPa. If the sum of the elastic modulus of each of the first layer 210, the second layer 220 and the third layer 230 satisfies the above-described numerical ranges, the lead film 190 has excellent tensile strength, so that adhesion between the lead film 190 and the electrode lead 180 is high and durability of the pouch may be improved.

The first layer 210, the second layer 230 and the third layer 230 each have an elastic modulus of 700 MPa to 1200 MPa, specifically 900 MPa to 1100 MPa, and more specifically 900 MPa to 1000 MPa. If the elastic modulus of each of the first layer 210 to the third layer 230 satisfies the above-described numerical ranges, the tensile strength of the lead film 190 is secured, which is advantageous in designing a robust pouch.

Meanwhile, the first layer 210 is in direct contact with the electrode lead 180, and may be for bonding the lead film 190 to the electrode lead 180.

The first layer 210 may include any material that facilitates adhesion to the electrode lead 180. Specifically, the first layer 210 may include acid-modified polyolefin. For example, the first layer 210 may include at least one among acid-modified polypropylene (PPa), acid-modified polyethylene (PEa), and plasma-treated polypropylene (PP), but is not limited thereto.

The melting point of the first layer 210 may be 130 °C to 150 °C, specifically 135 °C to 140 °C. If the melting point of the first layer 210 satisfies the above-described numerical ranges, the first layer 210 is melted within a predetermined tact time, so that the lead film 190 and the electrode lead 180 may be easily fused.

The thickness of the first layer 210 may be 50 µm to 80 µm, specifically 50 µm to 75 µm, and more specifically 60 µm to 75 µm. If the thickness of the first layer 210 satisfies the above-described numerical ranges, it has an effect of preventing penetrating pinholes and leakage in an edge portion when the electrode lead and the lead film are fused.

The second layer 220 may be a layer positioned in the center of the lead film 190.

The melting point of the second layer 220 may be 140 °C to 180 °C, specifically 145 °C to 165 °C. If the melting point of the second layer 220 satisfies the above-described numerical ranges, excessive deformation of the lead film 190 is prevented by heat applied during fusion (adhesion between the lead film and electrode lead) or sealing (adhesion between the lead film and pouch film laminate), and the shape of the lead film 190 may be maintained.

The second layer 220 may include an additive such as polypropylene, polyolefin elastomer (POE) and/or a coloring agent, but is not limited thereto. Among these, a polymer included in the second layer 220 may be a homopolymer. If a homopolymer is included in the second layer 220, the melting point of the second layer 220 may be controlled to be in the above-described numerical ranges, and deformation by heat may be minimized, which is advantageous in terms of securing insulation properties.

In addition, in order to suppress the induction of interfacial peeling-off, the second layer 220 may not include a heat-resistant polymer or a block copolymer, which includes cross-linking molecules.

The thickness of the second layer 220 may be 40 µm to 70 µm, specifically 50 µm to 70 µm, and more specifically 60 µm to 70 µm. If the thickness of the second layer 220 satisfies the above-described numerical range, there is a robust design effect in terms of securing insulation properties by preventing deformation by heat applied during welding and sealing.

The third layer 230 may be a layer in direct contact with the battery case 110, specifically the sealant layer of the pouch film laminate.

The melting point of the third layer 230 may be 130 °C to 150 °C, specifically 135 °C to 140 °C. If the melting point of the third layer 230 satisfies the above-described numerical ranges, the third layer 230 is melted within a predetermined tact time, so that the lead film 190 and the battery case 110 may be easily sealed.

The third layer 230 may include polypropylene and polyolefin elastomer (POE), but is not limited thereto. Among these, a polymer included in the third layer 230 may be a copolymer. If a copolymer is included in the third layer 230, the melting point of the third layer 230 may be controlled to be in the above-described numerical ranges, and is similar to the melting point of a polymer in the sealant layer of the pouch film laminate, so that it is advantageous for securing sealing processibility.

The thickness of the third layer 230 may be 40 µm to 100 µm, specifically 40 µm to 80 µm, and more specifically 40 µm to 60 µm. If the thickness of the third layer 230 satisfies the above-described numerical ranges, there is an effect of securing a polymer (e.g., polypropylene) residual rate sufficient to secure strength during the sealing between the electrode lead and the pouch film laminate.

The lead film 190 may be formed of a non-conductor having non-conductivity that does not conduct electricity well. In general, as the lead film 190, an insulating tape which is easily attached to the electrode lead 180 and/or the pouch film laminate and is relatively thin is often used, but is not limited thereto, and any member capable of insulating the electrode lead 180 may be used.

The thickness of the lead film 190 may be 150 µm to 250 µm, specifically 150 µm to 220 µm, and more specifically 180 µm to 220 µm. If the thickness of the lead film 190 satisfies the above-described numerical ranges, tensile properties of the lead film may be increased to secure pouch durability while securing sufficient sealing strength, so that the cell energy density may be prevented from degrading.

### (5) Electrolyte

The pouch-type secondary battery 100 according to the present invention may further include an electrolyte (not shown) injected into the pouch-type case 110. The electrolyte is for moving lithium ions generated by an electrochemical reaction of an electrode during charging /discharging of the secondary battery 100, and may include a non-aqueous organic electrolyte solution, which is a mixture of a lithium salt and an organic solvent or a polymer using a polymer electrolyte. Furthermore, the electrolyte may include a sulfide-based, oxide-based, or polymer-based solid electrolyte, and such a solid electrolyte may have flexibility to be easily deformed by an external force.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Examples and Comparative Examples

### Example 1

### (1) Manufacturing of lead assembly

A lead film having a laminated structure including a 70 µm-thick acid-modified polypropylene film (first layer), a 70 µm-thick polypropylene homopolymer film (second layer), and a 60 µm-thick polypropylene copolymer film (third layer) was prepared by a three-layer coextrusion method. Subsequently, the lead film was disposed to surround the outer circumferential surface of an electrode lead having a thickness of 60 µm to manufacture a lead assembly.

### (2) Manufacturing of pouch-type case

On one surface of an aluminum alloy thin film having a width of 266 mm, a length of 50 m, and a thickness of 60 µm, a polyethyleneterephthalate (PET) film having a width of 266 mm, a length of 50 m, and a thickness of 12 µm and a nylon film having a thickness of 12 µm and a nylon film having a width of 266 mm, a length of 50 m, and a thickness of 25 µm were stacked, and on the other surface thereof, a polypropylene film having a width of 266 mm, a length of 50 m, and a thickness of 80 µm was stacked to manufacture a pouch film laminate having a structure of polyethyleneterephthalate/nylon/aluminum alloy thin film/polypropylene film.

Here, the polyethyleneterephthalate film and the nylon film are a base layer, the aluminum alloy thin film is a gas barrier layer, and a polypropylene film is a sealant layer.

The pouch film laminate was molded to manufacture a pouch-type case including a receiving portion and a sealing portion.

### (3) Manufacturing of pouch-type secondary battery

A negative electrode, a positive electrode, and a porous polyethylene separator were assembled in a stacking manner and then laminated to manufacture an electrode assembly. Thereafter, a lead assembly was coupled to the electrode assembly.

LiPF₆ was dissolved to 1.0 M in a solvent (EC:EMC:DMC = 3:3:4 volume ratio) to prepare an electrolyte. With the front end of the lead assembly drawn to the outside, the electrode assembly was accommodated in the pouch-type case and the electrolyte was injected thereto.

Thereafter, the sealing portion of the pouch-type case was sealed for 2 seconds under the conditions of a seal bar area of 200 mm × 10 mm, 220 °C, and 0.27 MPa, and then left to stand for 4 hours at 60 °C to manufacture a pouch-type secondary battery. At this time, a portion of the sealing portion in which the lead assembly is formed has a structure in which lower case/lead film/electrode lead/lead film/upper case are sequentially stacked.

### Example 2

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film applied to the second layer.

A pouch-type case and a pouch-type secondary battery were manufactured in the same manner as in Example 1, except that the above-described lead assembly was used.

### Example 3

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film applied to the second layer.

A pouch-type case and a pouch-type secondary battery were manufactured in the same manner as in Example 1, except that the above-described lead assembly was used.

### Comparative Example 1

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film applied to the second layer.

A pouch-type case and a pouch-type secondary battery were manufactured in the same manner as in Example 1, except that the above-described lead assembly was used.

### Comparative Example 2

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film applied to the third layer.

A pouch-type case and a pouch-type secondary battery were manufactured in the same manner as in Example 1, except that the above-described lead assembly was used.

### Comparative Example 3

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film respectively applied to the third layer.

A pouch-type case and a pouch-type secondary battery were manufactured in the same manner as in Example 1, except that the above-described lead assembly was used.

### Comparative Example 4

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film respectively applied to the third layer.

A pouch-type case and a pouch-type secondary battery were manufactured in the same manner as in Example 1, except that the above-described lead assembly was used.

### Comparative Example 5

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film applied to the third layer.

A pouch-type case and a pouch-type secondary battery were manufactured in the same manner as in Example 1, except that the above-described lead assembly was used.

### Comparative Example 6

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film respectively applied to the third layer.

A pouch-type case and a pouch-type secondary battery were manufactured in the same manner as in Example 1, except that the above-described lead assembly was used.

### Comparative Example 7

A lead assembly was manufactured in the same manner as in Example 1, except that the ratio of polypropylene, which is a base resin to be introduced at the time of extrusion, and the ratio of a polyolefin-based elastomer, which is a softening agent, were adjusted in order to control the elastic modulus of a polymer film respectively applied to the third layer.

A pouch-type case and a pouch-type secondary battery were manufactured in the same manner as in Example 1, except that the above-described lead assembly was used.

### Experimental Example 1: Evaluation of physical properties of polymer film

Before sealing the pouch, the physical properties of each polymer film applied to the first layer to the third layer in each of Examples 1 to 3 and Comparative Examples 1 to 7 were measured.

Specifically, the melting point of the polymer film was measured by a differential scanning calorimetry method by using the DSC 25 of TA Instrument Co.

The elastic modulus of the polymer film was measured in a machine direction (MD) of the polymer film at room temperature (25 °C) using a Universal Test Machine (UTM).

The measurement results are shown in Table 1 below.

**[Table 1]**

| | First layer | | Second layer | | Third layer | | Total of elast ic modul us of each layer (MPa) | Greater value of differenc e in elastic modulus between any two layers / Greatest value among elastic modulus of each layer |
|---|---|---|---|---|---|---|---|---|
| | Melt ing poin t (°C) | Elas tic modu lus (MPa ) | Melti ng point (°C) | Elast ic modul us (MPa) | Melti ng point (°C) | Elast ic modul us (MPa) | | |
| | | | | | | | | (%) |
| Example 1 | 140 | 900 | 160 | 900 | 140 | 900 | 2700 | 0 |
| Example 2 | 140 | 900 | 160 | 1000 | 140 | 900 | 2800 | 10 |
| Example 3 | 140 | 900 | 160 | 1100 | 140 | 900 | 2900 | 18.1 |
| Comparative Example 1 | 140 | 900 | 160 | 1500 | 140 | 900 | 3300 | 40 |
| Comparative Example 2 | 140 | 900 | 160 | 900 | 140 | 700 | 2500 | 22.2 |
| Comparative Example 3 | 140 | 900 | 160 | 1100 | 140 | 700 | 2700 | 36.4 |
| Comparative Example 4 | 140 | 900 | 160 | 1500 | 140 | 700 | 3100 | 53.3 |
| Comparative Example 5 | 140 | 900 | 160 | 900 | 140 | 500 | 2300 | 44.4 |
| Comparative Example 6 | 140 | 900 | 160 | 1100 | 140 | 500 | 2500 | 54.5 |
| Comparative Example 7 | 140 | 900 | 160 | 1500 | 140 | 500 | 2900 | 66.7 |

### Experimental Example 2: Evaluation of sealing strength between lead film and pouch film laminate and interfacial peeling-off

The sealing strength between the lead film and the pouch film laminate in the pouch-type secondary battery manufactured in each of Examples 1 to 3 and Comparative Examples 1 to 7 was evaluated.

Specifically, in the pouch-type secondary battery, the sealing portion in which the lead assembly and pouch film laminate were sealed was cut at intervals of 15 mm, and the electrode lead was coupled to a lower jig of the UTM, and the pouch film laminate was coupled to an upper jig thereof, and then pulled in a 180° direction at a rate of 5 mm/min at room temperature (25 °C) and 60 °C, respectively. At this time, in the measured sealing strength graph, an average value from a point exceeding 4.5 kgf/15mm to an 8 mm section was calculated to calculate the low-speed sealing strength. The results are shown in Table 2 below.

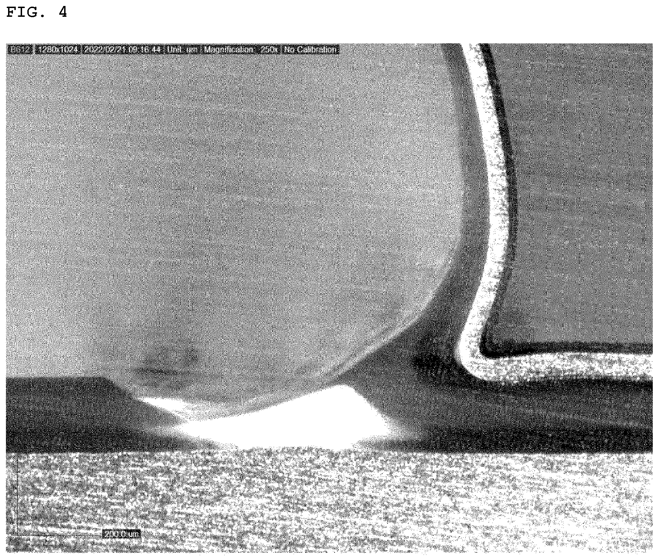

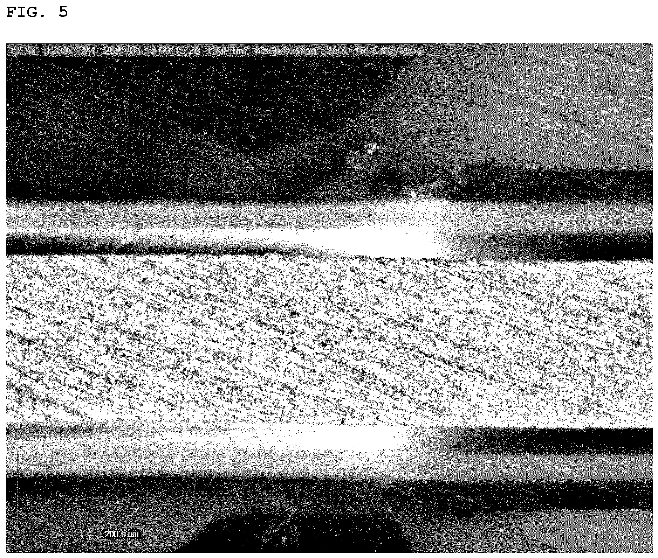

In addition, by photographing a cross-section of the sealing portion using an AM4113ZT electron microscope by Dino-Lite Co., it was confirmed whether interfacial peeling-off occurred in the sealing portion in which the lead film and the pouch film laminate were sealed. The results are shown in Table 2 and FIG. 4 and FIG. 5 below.

O: Interface between the second layer and the third layer was peeled off.

X: Interface between the second layer and the third layer was not peeled off.

FIG. 4 is a cross-sectional image when the sealing portion in which the lead assembly was disposed was opened in Example 1, and FIG. 5 is a cross-sectional image after the sealing portion in which the lead assembly was disposed was opened in Comparative Example 2. As shown in FIG. 4, in Example 1, the second layer, the third layer, and the sealant layer are simultaneously deformed, which relieves stress concentration, so that it can be confirmed that interfacial peeling-off between each layer does not occur. On the other hand, as illustrated in FIG. 5, in Comparative Example 2, the interface between the second layer and the third layer was peeled off because the second layer was not deformed, so that it can be confirmed that only the first layer and second layer of the lead film remain on the electrode lead.

### Experimental Example 3: Evaluation of adhesion strength between electrode lead and lead film in lead assembly

The electrolyte solution adhesion strength of the lead assembly manufactured in each of Examples 1 to 3 and Comparative Examples 1 to 7 was measured. Specifically, the reed assembly was supported in an electrolyte solution (EC:EMC:DMC = 3:3:4 volume ratio, LiPF₆ 1.0 M), and then stored in an 80 degree chamber for 1 day. The lead assembly was taken out from the electrolyte solution to remove residual electrolyte solution by washing, and was left to stand in the atmosphere for 1 hour. A portion spaced 10 mm apart from one edge of the lead assembly was bent to break the electrode lead, and both ends of the lead assembly were respectively coupled to a lower jig and an upper jig of a UTM, and then, an average value of a flat section was calculated in an adhesive strength graph measured when pulling 30 mm in a 180° direction at a rate of 50 mm/min. The results are shown in Table 2 below.

**[Table 2]**

| | Low-speed sealing strength between lead film and pouch film laminate (kgf/15mm) | After roomtemperature storage Present or absence of interfacial peeling-off | Present or absence of interfacial peeling-off after high-temperature storage | Adhesion strength between electrode lead and lead film (N/cm) |
|---|---|---|---|---|
| Example 1 | 11.1 | X | X | 29.0 |
| Example 2 | 10.8 | X | X | 29.5 |
| Example 3 | 10.9 | X | X | 30.4 |
| Comparative Example 1 | 6.9 | O | O | 31.8 |
| Comparative Example 2 | 7.5 | X | O | 27.7 |
| Comparative Example 3 | 6.6 | X | O | 30.4 |
| Comparative Example 4 | 6.2 | O | O | 29.2 |
| Comparative Example 5 | 6.6 | X | O | 23.2 |
| Comparative Example 6 | 6.3 | O | O | 24.5 |
| Comparative Example 7 | 5.9 | O | O | 29.6 |

According to Tables 1 to 2, in the case of Examples 1 to 3, in which the difference in elastic modulus between two layers selected from the first layer to the third layer is 20% or less of the greatest value among the elastic modulus of the first layer to the third layer, since the sealant layer, the second layer, and the third layer were simultaneously deformed, the stress concentration was relieved, so that it can be confirmed that the low-speed sealing strength between the lead film and the pouch film laminate was significantly higher than that of Comparative Examples 1 to 7, and that interfacial peeling-off did not occur in the sealing portion in which the lead film and the pouch film laminate were sealed.

On the other hand, in the case of Comparative Examples 1 to 7 in which the difference in elastic modulus between two layers selected from the first layer to the third layer is greater than 20% of the greatest value of the elastic modulus of each of the first layer to the third layer, since the difference in elastic modulus between the layers is large, stress is concentrated at the interface between the layers, so that it can be confirmed that peeling-off occurred at the interface between the second layer and the third layer of the lead film under the condition of room temperature or high temperatures, and that the low-speed sealing strength was significantly lower than that of Examples 1 to 3. In addition, in the case of Comparative Examples 2, 5, and 6, the lead film is easily elongated (stretched) due to a relatively small sum of the tensile strength of each layer of the lead film, so that it can be confirmed that the adhesion strength between the lead film and the electrode lead is lower than that of Examples 1 to 3.

### [Description of the Reference Numerals or Symbols]

- 100:: Pouch-type secondary battery
- 110:: Pouch-type case
- 120:: First case
- 122:: Cup portion
- 124:: Receiving portion
- 130:: Second case
- 132:: Cup portion
- 140:: Bridge portion
- 150:: Sealing portion
- 160:: Electrode assembly
- 170:: Electrode tab
- 172:: Positive electrode tap
- 174:: Negative electrode tap
- 180:: Electrode lead
- 182:: Positive electrode lead
- 184:: Negative electrode lead
- 190:: Lead film
- 210:: First layer
- 220:: Second layer
- 230:: Third layer

## Claims

1. A pouch-type secondary battery comprising:
an electrode assembly;
a pouch-type case including a receiving portion for accommodating the electrode assembly and a sealing portion for sealing the receiving portion;
an electrode lead connected to the electrode assembly and protruding to the outside of the pouch-type case via the sealing portion; and
a lead film disposed between the electrode lead and the pouch-type case, wherein the lead film includes a first layer disposed on the electrode lead, a second layer disposed on the first layer, and a third layer disposed on the second layer,
wherein:
the difference in elastic modulus between two layers selected from the first layer to the third layer is 20% or less of the greatest value among the elastic modulus of the first layer to the third layer; and
the sum of the elastic modulus of each of the first layer to the third layer is 2600 MPa or greater, wherein the elastic modulus is an elastic modulus measured at room temperature by using a UTM.

2. The pouch-type secondary battery of claim 1, wherein the difference in elastic modulus between the second layer and the third layer is 20% or less of the greater value of the elastic modulus of the second layer and the third layer.

3. The pouch-type secondary battery of claim 1, wherein the elastic modulus of each of the first layer to the third layer is the same as each other.

4. The pouch-type secondary battery of claim 1, wherein the difference in elastic modulus between two layers selected from the first layer to the third layer is 200 MPa or less.

5. The pouch-type secondary battery of claim 1, wherein the sum of the elastic modulus of each of the first layer to the third layer is 2600 MPa to 3600 MPa.

6. The pouch-type secondary battery of claim 1, wherein the the elastic modulus of each of the first layer to the third layer is 700 MPa to 1200 MPa.

7. The pouch-type secondary battery of claim 1, wherein the second layer has a melting point of 140 °C to 180 °C.

8. The pouch-type secondary battery of claim 1, wherein the second layer comprises polypropylene, wherein the polypropylene is a homopolymer.

9. The pouch-type secondary battery of claim 1, wherein the third layer has a melting point of 130 °C to 150 °C.

10. The pouch-type secondary battery of claim 1, wherein the third layer comprises polypropylene, wherein the polypropylene is a copolymer.

11. The pouch-type secondary battery of claim 1, wherein the first layer comprises acid-modified polyolefin.

12. The pouch-type secondary battery of claim 1, wherein one surface of the electrode lead in direct contact with the lead film is coated with one or more selected from the group consisting of at least one inorganic material among chromium (Cr), nickel (Ni), zirconium (Zr), and titanium (Ti), an aluminum oxide film (Al₂O₃), and a polyvinyl alcohol (PVA)-based, acryl-based and/or epoxy-based resin serving as a binder.

13. The pouch-type secondary battery of claim 1, wherein the lead film has a thickness of 150 µm to 250 µm.
